# EUROPEAN PATENT APPLICATION

(11) **EP 2 461 551 A1**
(43) Date of publication of application: **06.06.2012**
(21) Application number: 10306354.1
(22) Date of filing: 06.12.2010
(51) Int. Cl.: H04M 1/725, H04W 88/02

(54) **Method of managing asynchronous entities**

(71) Applicant: Gemalto SA, 92190 Meudon (FR)
(72) Inventor: Foesser, Christophe, LA CIOTAT, 13600 (FR)

(57) **Abstract**

The invention is a method for managing the communication between first and second asynchronous entities embedded in a secure element. The first entity is a NFC application. The secure element comprises server and a STK engine and is connected to a Telecom equipment comprising a NFC controller. The second entity depends on the STK engine. The method comprises the steps of:
- sending a first message from the first entity to a second application comprised in the telecom equipment, the first message is sent through the NFC controller and it requests the sending of a second message to the server,
- in response to the receipt of the first message, sending the second message to the server over the BIP in order to activate the STK engine, the sending of the second message is initiated by the second application.

## Description

### (Field of the invention)

The present invention relates to methods of managing asynchronous entities. It relates particularly to methods for optimizing communication between two asynchronous entities which are embedded in a secure element.

### (Prior art)

Secure elements may provide several services like crypto services, SIM features, or any applications which may be embedded in a smart card for example.

The NFC (Near Field Communication) technology is based on the exchanging of data via a magnetic field. Two NFC devices may communicate thanks to an inductive coupling in a field frequency equal to 13.56 MHz. In particular, the ISO14443 and ISO18092 standards provide modulation technologies and communication protocols which may be used in NFC domain.

Secure elements (also named secure tokens) are small machines comprising a memory, a microprocessor and an operating system for computing treatments. Secure elements are intended to connect - either in contact or contactless mode - a device which may provides power and a user interface. In general, secure elements comprise a plurality of memories of different types. For example, they may comprise memory of RAM, ROM, EEPROM or Flash type. Secure elements have limited computing resources. For example, smart cards are secure elements. A secure element may comprise a NFC application. A secure element may comprise a SimToolKit (STK) engine able to manage STK commands as described in ETSI GSM 11.14 standard.

A mobile phone may have NFC features allowing a NFC reader to access a NFC application embedded in a SIM card. A SIM card may comprise a SimToolKit (STK) engine, an application depending on the STK engine and a NFC application. An application depending on the STK engine is an application that uses the STK engine features. For example, such an application may exchange data with the mobile phone through commands sent to the STK engine. Thus the application depends on the STK engine for exchanging data with the mobile phone. There is a difficulty for exchanging data between an application depending on the STK engine and a NFC application. This difficulty is due to the fact that the STK engine and a NFC application operate under different schemes. These two schemes are asynchronous. The NFC application may be started at any time while the SimToolKit engine can perform a treatment only when it has received a message from the mobile phone. Possible messages are defined in the ETSI TS 102 223 v7.0 and upper standard. For example, the Status message may be used. In such a case, when a NFC application embedded in a SIM card is triggered by an external NFC reader, the SIM card must wait for the receipt of a Status message which allows the processing of the display of data on the mobile phone display. The sending of Status messages is managed in polling mode. In general, a Status message is sent every 6 to 30 seconds. So it may take up to 11 seconds before the data sent by the NFC application is displayed on the mobile phone.

There is a need for synchronizing a NFC application and an application depending on a STK engine which are embedded in a secure element.

### (Summary of the Invention)

An object of the invention is to solve the above mentioned technical problem.

The object of the present invention is a method for managing the communication between first and second asynchronous entities embedded in a secure element. The first entity is a first NFC application. The secure element comprises a web server and a SimToolkit engine. The secure element is connected to a telecom equipment which comprises a NFC controller. The second entity is dependent on the SimToolkit engine. The method comprises the steps of:
- sending a first message from the first entity to a second application comprised in the telecom equipment, said first message being sent through the NFC controller and said first message requesting the sending of a second message to the web server,
- further to the receipt of the first message, sending the second message to the web server over the Bearer Independent Protocol in order to activate the SimToolkit engine, the sending of the second message being initiated by the second application.

Advantageously, the second message may be directly sent from the second application to the web server.

Alternatively, the telecom equipment may comprise a web browser and the second application may request the web browser to send the second message to the web server.

In one embodiment, the second application may have no Graphical User Interface.

Advantageously, the second application may be a midlet, the first entity may be a NFC applet and the first message may contain a HCI Event Transaction.

In one embodiment, the sending of the first message may be triggered by the receipt of a third message sent by a NFC reader.

In another embodiment, the sending of the first message may be triggered by the receipt of a third message generated by a component embedded either into the secure element or into the telecom equipment.

Another object of the invention is a telecom equipment comprising a NFC controller and a secure element. The secure element is connected to the telecom equipment. The secure element comprises a web server, a SimToolkit engine, a first NFC application and an entity dependent on the SimToolkit engine. The entity and the first NFC application are asynchronous. The telecom equipment comprises a second application. The first NFC application is capable of sending a first message to the second application through the NFC controller in order to request the sending of a second message to the web server. The second application is adapted to initiate the sending of the second message to the web server by using the Bearer Independent Protocol (also named BIP) in response to the receipt of the first message.

Advantageously, the first NFC application may be able to send the first message through the Single Wire Protocol (also named SWP).

In one embodiment, the second application may be a midlet, the first entity may be a NFC applet and the first message may contain a HCI Event Transaction.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically a first example of a system comprising a mobile phone and a SIM card according to the invention wherein a direct call is performed;
- Figure 2 is a second example of a system comprising a NFC reader, a mobile phone and a smart card according to the invention wherein a direct call is performed, and
- Figure 3 is an example of a system comprising a mobile phone and a smart card according to the invention wherein an indirect call is performed.

### (Detailed description of the preferred embodiments)

A NFC controller is a hardware module also named ContactLess Front-end chip (CLF). The invention may apply to any types of devices comprising a NFC controller and a secure element and which are able to manage the Bearer Independent Protocol (also named BIP) as defined in ETSI TS 102 223 v7.0 and upper standard. These devices may be portable devices like mobile phones, Electronic Funds Transfer Terminals for payment or Personal Digital Assistant (PDA) equipped with communication means. These devices may also be fixed devices like smart poster as known as tag. These devices may also be telecom equipments used in Machine-To-Machine (M2M) domain.

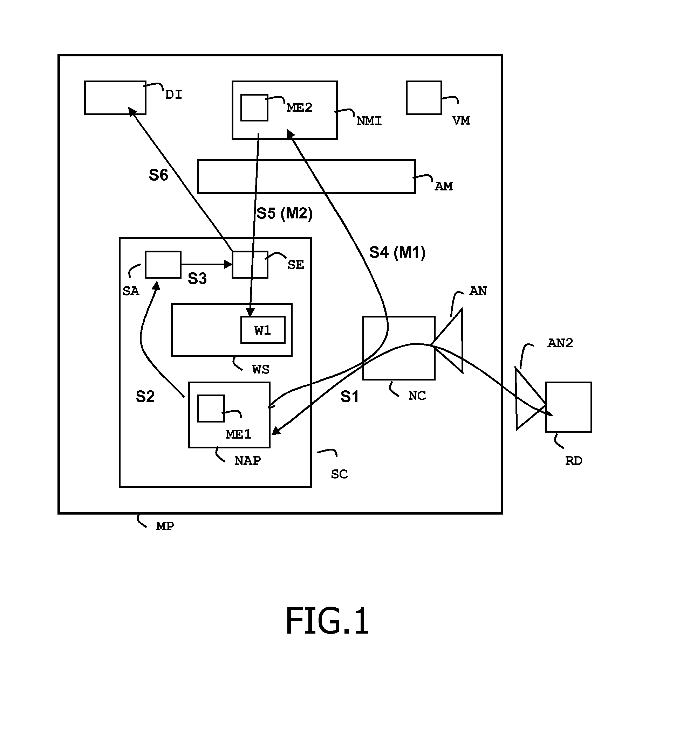

**Figure 1** shows an example of a system comprising a NFC reader RD, a mobile phone MP and a secure element SC according to the invention. Figure 1 also shows a step sequence for managing the communication between a NFC application and a STK application through a direct call according to the invention.

The NFC reader RD is a NFC device working in reader mode. The NFC reader RD has its own antenna AN2.

The mobile phone MP comprises an antenna AN, a NFC controller NC, a secure element SC, a display DI, a Java virtual machine VM, an application NMI and an application manager AM. The secure element SC is connected to the mobile phone MP either in contact or wireless mode.

In a one embodiment, the secure element SC is a Universal Integrated Circuit Card (UICC). The secure element may be a SIM card, a USIM card or any personal security token.

Alternatively, the secure element SC may be a Secure Digital (SD) card, a miniSD card, a microSD card or a smart card.

In the example of Figure 1, the application NMI is a Midlet which relies on the Java virtual machine VM. The Midlet is a J2ME application which uses the MIDP 2.x as defined in SUN Mobile Information Device Profile for Java™ 2 Micro Edition Version 2.1 for example. The application manager AM controls the activities of the Midlets within the Java ME environment on the mobile phone MP. The application manager AM can select which Midlet is active at a given time by starting and by pausing it individually.

The NFC controller NC and the secure element SC are linked by a single wire link (not drawn at Figure 1). This single wire link allows a communication in contact mode between the NFC controller NC and the secure element SC. In a preferred embodiment, both the NFC controller NC and the secure element SC use the Single Wire Protocol (SWP) as defined by the TS 102.613.

In the present document, the wording "NFC application" means an application which is able to communicate with a NFC controller.

The secure element SC comprises a NFC application NAP that is intended to communicate with the NFC reader RD through a contactless protocol. The used contactless protocol may be compliant with ISO14443, ISO18092 or ISO15693 standards. The used contactless protocol may also comply with proprietary specifications.

The two applications SA and NAP may form a Transport application which provides access to a public transport network or a Payment application. These two applications may also be in various domains like electronic ticketing, gaming, e-wallet, debit/credit payment card, electronic keys for accessing a car/a house / a room, etc. The NFC reader RD comprises a reader-part application (not drawn) which is intended to communicate with the application NAP.

The secure element SC comprises a web server WS. The web server WS comprise an application W1 which may be implemented as a Servlet. In one embodiment, the web server WS may be a Smart Card Web Server (SCWS) as defined by OMA-TS Smartcard Web Server V1.0 standard.

The secure element SC comprises a SimToolkit (STK) engine and a STK application SA. The STK application SA is an application depending on the STK engine SE. In other words, when running, the STK application SA needs to access services of the STK engine SE.

The application NAP comprises a means ME1 able to send a message M1 to the application NMI through the NFC controller NC. The message M1 requests the sending of a second message M2 to the web server WS. The message M1 is conveyed from the secure element SC to the controller NC via the single wire link.

The application NMI comprises a means ME2 able to initiate the sending of the message M2 targeting the web server WS via the Bearer Independent Protocol (BIP). The means ME2 is adapted to initiate the sending of the message M2 in response to the receipt of the message M1.

Figure 1 shows an example of step sequence for managing the communication between the application NAP and the STK engine SE according to the invention. Both the application NAP and the STK application SA are asynchronous. This is due to the fact that the application NAP depends on the STK engine SE and that the STK engine SE and the application NAP behave in asynchronous ways.

First the application NAP is triggered by an event. In the example of Figure 1, the application NAP received a data emitted by the NFC reader RD at step S1. This emitted data is routed through the NFC controller NC to the secure element SC. Thus the receipt of this emitted data in the secure element SC is the event that triggers the application NAP.

At step S2, the application NAP sends a data to be displayed on the mobile phone display DI. This data is sent by the application NAP to the STK application SA. At step S3, the STK application SA sends a message to the STK engine SE for requesting the display of data on the mobile phone display DI. At this point, the STK engine SE should wait for several seconds without the invention.

At step S4, the means ME1 sends a message M1 which targeted the application NMI.

The message M1 is routed through the NFC controller NC to the application NMI.

In one embodiment, the message M1 may contain the "HCI Event Transaction" as defined by ETSI TS 102 705 V9.0 and upper standard.

The message M1 may be transmitted by the controller NC to the application manager AM via the baseband modem (not drawn) of the mobile phone MP. Then the application manager AM launches the application NMI and provides the application NMI with the message M1. This launching may be implemented trough the Push registry mechanism as defined by the SUN JSR257 specification. Thus the message M1 may be transported through several forms between the means ME1 and the application NMI.

The three steps S2, S3 and S4 have been described in a particular order for clarity reasons. Nevertheless these three steps may occur in any order.

Then at step S5, the means ME2 of the application NMI sends a message M2 to the web server WS through a local communication network based on a BIP channel. The use of the local communication network based on BIP channel activates the STK engine SE.

The sending of the message M2 is triggered by the receipt of the message M1.

This embodiment corresponds to a direct call performed by the application NMI. For instance, the direct call (i.e. the direct sending of the message M2) may be done either by sending a request to the web server WS. The direct call may also be performed by sending a request to the application W1 of the web server WS thanks to the J2ME standard network API. In this case, the message M2 is sent to the web server WS which further forwards the message M2 to the application W1. For instance the means ME2 may send the following network request "HTTP://127.0.0.1:3516/trigger". This request is used for generating the message M2 to be sent to the server WS. The application W1 may receive a message containing the following item: "GET HTTP 1.1 /trigger".

It is to be noted that the application W1 may have no computing treatment. The main role of the application W1 is to be a target that allows starting the STK engine SE thanks to the sending of a request targeting the application W1. The invention takes advantage of the sending of a message targeting a web application and initiated by the application NMI. Whatever the further execution of theses two applications, the message sending generates the activation of the STK engine SE.

At this point, the STK engine SE has been started in the secure element SC. Thus at step S6 the STK engine SE may send a message to the mobile phone in order to have the relevant data displayed on the mobile phone display DI.

Since the role of the application NMI is to provide a way to start the STK engine SE, the application NMI may have no graphical user interface (GUI).

The invention takes advantage of the very short execution time of the steps S4 and S5. Thus the STK engine is activated in a nearly real time way.

In the above-described example, the application NAP is triggered by the receipt of a data emitted by the NFC reader RD at step S1. Alternatively, the application NAP may be triggered by any kind of event. For example, the application NAP may be triggered by the receipt of a message coming from a component embedded in the secure element SC itself. For instance, the secure element SC may comprises a sensor able to send a message to the application NAP. The embedded component may be a sensor able to measure the light, a motion, a temperature, a magnetic field, the gravity, the humidity, a vibration, the pressure, an electrical field, a sound, and any other physical aspects of the external environment

Alternatively, the application NAP may be triggered by the receipt of a message coming from a component embedded in the device MP. The embedded component may be a sensor as described above. Advantageously, the embedded component may send a message to the secure element SC via the NFC controller NC in order to take advantage of the existing interface between the secure element SC and the controller NC.

In another example, the embedded component may send a message to the secure element SC via an USB controller which is embedded in the telecom equipment MP.

In another example, the application SA may be included into the application NAP.

In a further example, the application SA may be included into the application W1. In this specific example, the STK application SA may send the display request to the STK engine SE after the application W1 has been triggered by the message M2. In other words steps S4 and S5 may occur before the step S3.

In the embodiment of Figure 1, the device MP may have no web browser.

Alternatively, application W1 can be a default web server WS application.

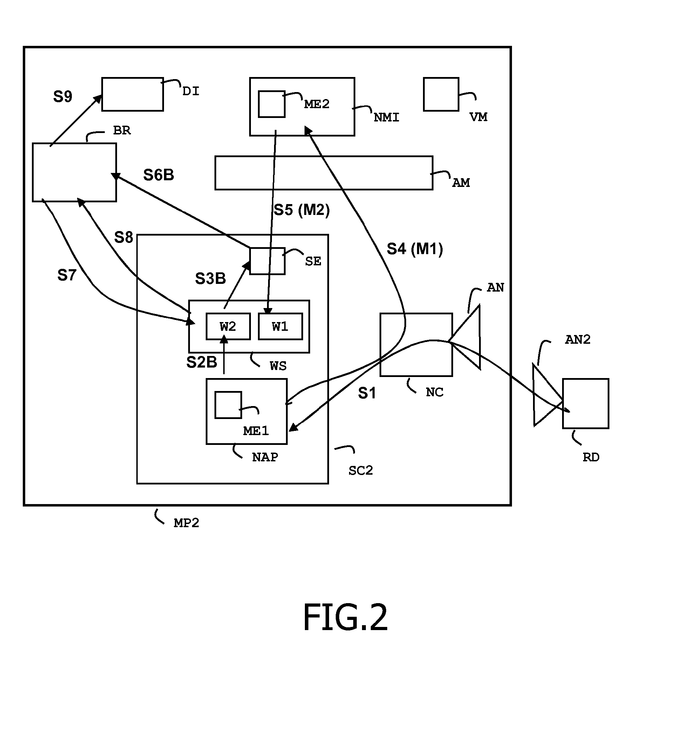

**Figure 2** shows another example of a system comprising a NFC reader RD, a mobile phone MP2 and a secure element SC2 according to the invention. Figure 2 also shows another step sequence for managing the communication between a NFC application and a Web server application through a direct call according to the invention.

The NFC reader RD is a reader similar to the one described at Figure 1.

The mobile phone MP2 is similar to the mobile phone MP of the Figure 1 with one difference: The mobile phone MP2 comprises a web browser BR.

The secure element SC2 may be connected to the mobile phone MP2 either in wire or wireless mode.

In a one embodiment, the secure element SC2 is a Universal Integrated Circuit Card (UICC). The secure element SC2 may be a SIM card, a USIM card, a Secure Digital (SD) card, a miniSD card, a microSD card, a smart card or any personal security token.

The NFC controller NC and the secure element SC2 are linked by a single wire link (not drawn). This single wire link allows a communication in contact mode between the NFC controller NC and the secure element SC2. In a preferred embodiment, both the NFC controller NC and the secure element SC2 use the Single Wire Protocol (SWP).

The secure element SC2 comprises a NFC application NAP that is intended to communicate with the NFC reader RD through a contactless protocol.

The application NAP may be a payment application for example.

The secure element SC2 comprises a web server WS. The web server WS comprises two applications W1 and W2. These applications may be implemented as SCWS servlets. In one embodiment, the web server WS may be a Smart Card Web Server (SCWS).

The secure element SC2 comprises a SimToolkit engine SE. The application W2 is an application depending on the STK engine SE. For instance, the application W2 needs the STK engine for displaying a text on the mobile phone display DI.

The application NAP comprises a means ME1 able to send a message M1 to the application NMI through the NFC controller NC. The message M1 requests the sending of a second message M2 to the web server WS. The message M1 is conveyed from the secure element SC2 to the controller NC via the single wire link.

The application NMI comprises a means ME2 able to initiate the sending of the message M2 targeting the web server WS via the Bearer Independent Protocol (BIP). The means ME2 is adapted to initiate the sending of the message M2 in response to the receipt of the message M1.

Figure 2 shows an example of step sequence for managing the communication between the application NAP and the application W2 according to the invention. The application NAP and the application W2 are asynchronous. In other words both the application NAP and the STK engine SE are asynchronous.

First the application NAP is triggered by an event. In the example of Figure 2, the application NAP received a data emitted by the NFC reader RD at step S1. This emitted data is routed through the NFC controller NC to the secure element SC2. Thus the receipt of this emitted data in the secure element SC2 is the event that triggers the application NAP.

At step S2B, the application NAP sends a data to be displayed on the mobile phone display DI. This data is sent by the application NAP to the application W2. At step S3B, the application W2 sends a message to the STK engine SE for requesting the display of data on the mobile phone display DI.

At step S4, the means ME1 sends a message M1 which targeted the application NMI. The message M1 is routed through the NFC controller NC to the application NMI.

The three steps S2B, S3B and S4 may occur in any order.

Then at step S5, the means ME2 of the application NMI sends a message M2 to the web server WS through a local communication network based on a BIP channel. The use of the local communication network based on BIP channel activates the STK engine SE. The sending of the message M2 is triggered by the receipt of the message M1.

This embodiment corresponds to a direct call performed by the application NMI. For instance, the direct call may be done by sending a request to the web server WS. The direct call may also be performed by sending a request to the application W1 of the web server WS thanks to the J2ME standard network API. In this case, the message M2 is sent to the web server WS which further forwards the message M2 to the application W1. It is to be noted that the application W1 may have no computing treatment. The main role of the application W1 is to be a target that allows starting the STK engine SE thanks to the sending of a request targeting the application W1.

Alternatively, the application W1 can be a default web server WS application.

At this point, the STK engine SE has been started in the secure element SC2. Thus at step S6B the STK engine SE may send a message to launch the browser BR. In response, the browser BR sends a request to the application W2 in order to get the data to be displayed at step S7. Then the application W2 send the relevant data to the browser at step S8. In response the browser BR displays the data on the screen DI of the mobile phone MP2 at step S9.

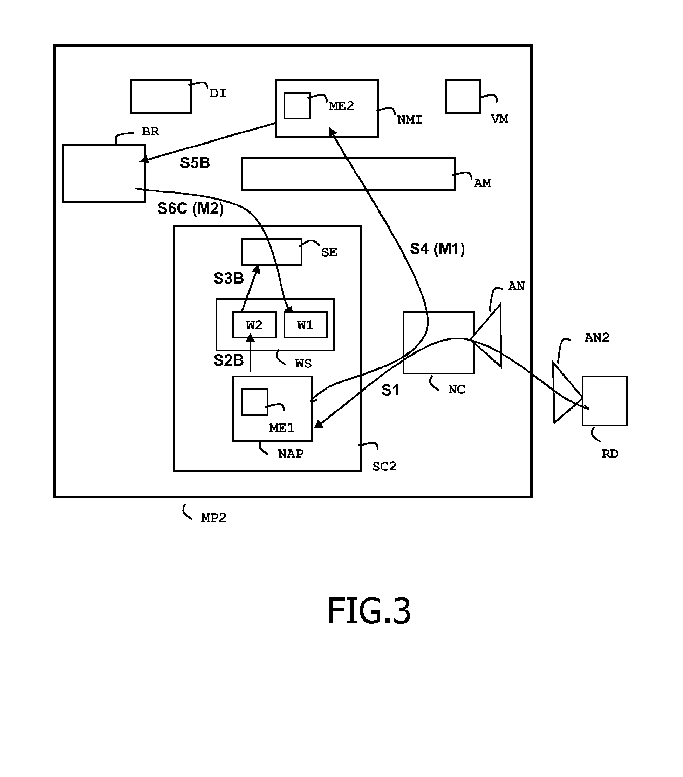

**Figure 3** shows another example of a system comprising a NFC reader RD, a mobile phone MP2 and a secure element SC2 according to the invention. Figure 3 also shows another step sequence for managing the communication between a NFC application and a Web server application through an indirect call according to the invention.

The NFC reader RD is a reader similar to the one described at Figure 1.

The mobile phone MP2 is similar to the mobile phone MP of the Figure 1 with one difference: The mobile phone MP2 comprises a web browser BR.

In a one embodiment, the secure element SC2 is a Universal Integrated Circuit Card (UICC) of USIM type. The NFC controller NC and the secure element SC2 are linked by a single wire link (not drawn) and communicate according to the Single Wire Protocol.

The secure element SC2 comprises a NFC application NAP that is intended to communicate with the NFC reader RD through a contactless protocol.

The application NAP may be an Identity application for example.

The secure element SC2 comprises a web server WS. The web server WS comprises two applications W1 and W2. The secure element SC2 comprises a SimToolkit (STK) engine SE. The application W2 is an application depending on the STK engine SE. For instance, the application W2 uses the STK engine services through a BIP channel for returning the requested data to be displayed on the mobile phone display DI.

The application NAP comprises a means ME1 able to send a message M1 to the application NMI through the NFC controller NC. The message M1 requests the sending of a second message M2 to the web server WS.

The application NMI comprises a means ME2 able to initiate the sending of the message M2 targeting the web server WS via the Bearer Independent Protocol (BIP). The means ME2 is adapted to send a message to the browser BR in response to the receipt of the message M1. The message sent to the browser BR requests the sending of the message M2 to the web server WS.

Figure 3 shows an example of step sequence for managing the communication between the application NAP and the application W2 according to the invention. Both the applications NAP and W2 are asynchronous.

The steps S1, S2B, S3B and S4 are similar to the corresponding steps described at Figure2.

Then at step S5B, the means ME2 of the application NMI uses a system call for launching the browser BR. The system call aiming at launching the browser BR is triggered by the receipt of the message M1.

Then at step S6C, the browser BR sends the message M2 to the web server WS through a local communication network based on a BIP channel. The use of the local communication network based on BIP channel activates the STK engine SE.

This embodiment corresponds to an indirect call performed by the application NMI since the browser acts as an intermediary component. For instance, the indirect call may be done by sending a first request to the browser BR. In response, the browser BR sends a second request to the web server WS. The second request may target either the application W1 or the application W2.

For instance the means ME2 may contain the following request: platformRequest ("HTTP://127.0.0.1:3516/DisplayResult");.

The message sent by the application NMI triggers the system browser BR. In response the browser BR use the URL which is provided by the message of step S5B. This URL corresponds to an access to the application W1.

At this point, the STK engine SE has been started in the secure element SC2. Further treatments may be performed by the application NAP and may lead to data exchange with the mobile phone MP2 elements via the STK engine SE.

Alternatively, the applications W1 and W2 may be merged in a single application.

It should be noted that the application NMI is not necessarily a midlet. The application NMI may be any type of application capable of sending a message to either the browser BR or to the web server WS. The application manager AM has been described for the example of midlets. Depending on the operating system framework, the application manager may be optional.

The invention applies whatever the type of operating system of the device connected to the secure element. For example, the invention is well-suited for cell phones using iOS ® for Iphone ®, Android OS ®, Symbian OS ®, Bada Mobile OS ®, Blackberry OS ® and Windows phone ®.

An advantage of the invention is to allow a NFC device to keep unchanged the polling mode of the Status messages. Since the frequency of the Status messages may be kept at a low rate, the communication means is not stressed. In addition, the invention allows removing superfluous status messages which reduce the communication bandwidth.

Moreover, the invention provides a solution which is independent from the Status messages management scheme. Thus the application is not limited by design constraints related to the management of Status message.

In the above-described examples, the activation of the STK engine SE allows to unlock the display of data. The mechanism of the invention may also be used for establishing a remote connection from the secure element to a distant server through the mobile phone. In this case, the secure element may act as a client when establishing the connection.

In another example, the mechanism of the invention may also be used for launching a targeted application into the telecom equipment.

In another example, the mechanism of the invention may also be used for generating a sound or another event into the telecom equipment.

## Claims

1. A **method** for managing the communication between first and second asynchronous entities embedded in a secure element (SC), said first entity being a first NFC application (NAP), the secure element (SC) comprising a web server (WS) and a SimToolkit engine (SE), said secure element (SC) being connected to a telecom equipment (MP) comprising a NFC controller (NC), said second entity (SA, W2) being dependent on the SimToolkit engine (SE), **characterized in that** the method comprises the steps of:
- sending a first message (M1) from the first entity (NAP) to a second application (NMI) comprised in the telecom equipment (MP), said first message (M1) being sent through the NFC controller (NC) and requesting the sending of a second message (M2) to the web server (WS),
- further to the receipt of the first message (M1), sending the second message (M2) to the web server (WS) over the Bearer Independent Protocol (BIP) in order to activate the SimToolkit engine (SE), the sending of the second message (M2) being initiated by the second application (NMI).

2. A method according to claim 1, wherein said the second message (M2) is directly sent from the second application (NMI) to the web server (WS).

3. A method according to claim 1, wherein the telecom equipment (MP) comprises a web browser (BR) and wherein the second application (NMI) requests the web browser (BR) to send the second message (M2) to the web server (WS).

4. A method according to any one of claims 1 to 3, wherein said second application (NMI) has no Graphical User Interface.

5. A method according to any one of claims 1 to 4, wherein said second application (NMI) is a midlet, wherein said first entity (NAP) is a NFC applet and wherein the first message contains a HCI Event Transaction.

6. A method according to any one of claims 1 to 5, wherein the sending of the first message is triggered by the receipt of a third message sent by a NFC reader (RD) .

7. A method according to any one of claims 1 to 5, wherein the sending of the first message (M1) is triggered by the receipt of a third message generated by a component embedded into the secure element (SC) or into the telecom equipment (MP).

8. A **telecom equipment** (MP, MP2) comprising a NFC controller (NC) and a secure element (SC) connected to said telecom equipment (MP, MP2), said secure element (SC) comprising a web server (WS), a SimToolkit engine (SE), a first NFC application (NAP) and an entity (SA, W2) dependent on the SimToolkit engine (SE), said entity (SA, W2) and first NFC application (NAP) being asynchronous, said telecom equipment (MP, MP2) comprising a second application (NMI),
**characterized in that** said first application (NAP) is adapted to send a first message (M1) to the second application (NMI) through the NFC controller (NC) in order to request the sending of a second message (M2) to the web server (WS), and **in that** the second application (NMI) is adapted to initiate the sending of the second message (M2) to the web server (WS) by using the Bearer Independent Protocol (BIP) in response to the receipt of the first message (M1).

9. A telecom equipment (MP, MP2) according to claim 8, wherein said first application (NAP) is able to send the first message (M1) through the Single Wire Protocol.

10. A telecom equipment (MP, MP2) according to any one of claims 8 to 9, wherein said second application (NMI) is a midlet, wherein said first entity (NAP) is a NFC applet and wherein the first message contains a HCI Event Transaction.
